# EUROPEAN PATENT APPLICATION

(11) **EP 4 811 831 A1**
(43) Date of publication of application: **23.09.2026**
(21) Application number: 26164117.9
(22) Date of filing: 11.03.2026
(51) Int. Cl.: H04W 4/46, H04W 4/44, H04W 4/38

(54) **INFORMATION PROCESSING SYSTEM, IN-VEHICLE DEVICE, INFORMATION PROCESSING DEVICE, AND INFORMATION PROCESSING METHOD**

(30) Priority: 21.03.2025 JP 2025047536
(71) Applicant: Toyota Jidosha Kabushiki Kaisha, Toyota-shi, Aichi-ken 471-8571 (JP)
(72) Inventor: SUGIMOTO, Shingo, Toyota-shi, Aichi-ken, 471-8571 (JP); ITO, Yuma, Toyota-shi, Aichi-ken, 471-8571 (JP); JENKITTIKUL, Napak, Toyota-shi, Aichi-ken, 471-8571 (JP)
(74) Representative: Simmons & Simmons

(57) **Abstract**

An in-vehicle device (21-1) mounted on a hub vehicle (20-1) that serves as a hub that provides data, the in-vehicle device (21-1) comprising a control unit (213-1) configured to: receive predetermined data relating to a predetermined area from an information processing device (10); generate a Service Set Identifier (SSID) including a time stamp of a time when the predetermined data are acquired or generated and area information for identifying the predetermined area; and transmit the predetermined data to a client vehicle (20-2) that receives the data provided from the hub vehicle (20-1) when the client vehicle (20-2) determines to acquire the predetermined data based on the time stamp and the area information included in the SSID.

## Description

### BACKGROUND OF THE INVENTION

### 1. Field of the Invention

The present disclosure relates to an information processing system, an in-vehicle device, an information processing device, and an information processing method.

### 2. Description of Related Art

In recent years, vehicle-to-vehicle communication systems for communication among vehicles have been developed. For example, Japanese Unexamined Patent Application Publication No. 2022-018362 (JP 2022-018362 A) discloses a communication device that is mounted on a vehicle, and that includes a first communication circuit that operates as an access point in an infrastructure mode and transmits and receives radio waves forward of the vehicle, and a second communication circuit that operates as a station in the infrastructure mode and transmits and receives radio waves forward of the vehicle, in order to facilitate establishing a wireless link among vehicles that enter an intersection. Such a vehicle-to-vehicle communication system allows sharing of data among vehicles.

### SUMMARY OF THE INVENTION

However, various vehicles request different data at different timings. Therefore, a more efficient method of sharing data among vehicles is required.

In view of the above circumstances, an object of the present disclosure is to provide an information processing system, an in-vehicle device, an information processing device, and an information processing method that enable more efficiently receiving data requested by each vehicle.

An aspect of the present disclosure provides an information processing system including: a first in-vehicle device mounted on a hub vehicle that serves as a hub that provides data; and a second in-vehicle device mounted on a client vehicle that receives the data provided from the hub vehicle, in which: the first control unit includes a control unit that receives predetermined data relating to a predetermined area from an information processing device, and generate an SSID including a time stamp of a time when the predetermined data are acquired or generated and area information for identifying the predetermined area; and the second control unit includes a control unit that receives the SSID from the first in-vehicle device, determines whether to acquire the predetermined data based on the time stamp and the area information included in the SSID, and when determining to acquire the predetermined data, requests the predetermined data from the first in-vehicle device.

An aspect of the present disclosure provides an information processing device including a control unit that: receives vehicle information from each of a plurality of vehicles, the vehicle information indicating at least one of a state and a position of each of the vehicles; determines a hub vehicle that serves as a hub that provides data from the vehicles based on the vehicle information; transmits predetermined data relating to a predetermined area to the hub vehicle; receives request information for the predetermined data from a client vehicle that receives the data provided from the hub vehicle; in response to receiving the request information, determines the hub vehicle that provides the predetermined data to the client vehicle based on a time stamp of a time when the hub vehicle acquires the predetermined data or when the predetermined data are generated; and transmits, to the client vehicle, an SSID of the determined hub vehicle that provides the predetermined data to the client vehicle.

According to the present disclosure, each vehicle can more efficiently receive data requested by the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a schematic configuration of an information processing system according to an embodiment of the present disclosure;
FIG. 2 illustrates a schematic configuration of a vehicle in the information processing system according to the embodiment of the present disclosure;
FIG. 3 is a sequence diagram illustrating a first operation example of the information processing system according to the embodiment of the present disclosure; and
FIG. 4 is a sequence diagram illustrating a second operation example of the information processing system according to the embodiment of the present disclosure.

### DETAILED DESCRIPTION OF EMBODIMENTS

An embodiment of the present disclosure will be described in detail below with reference to the drawings.

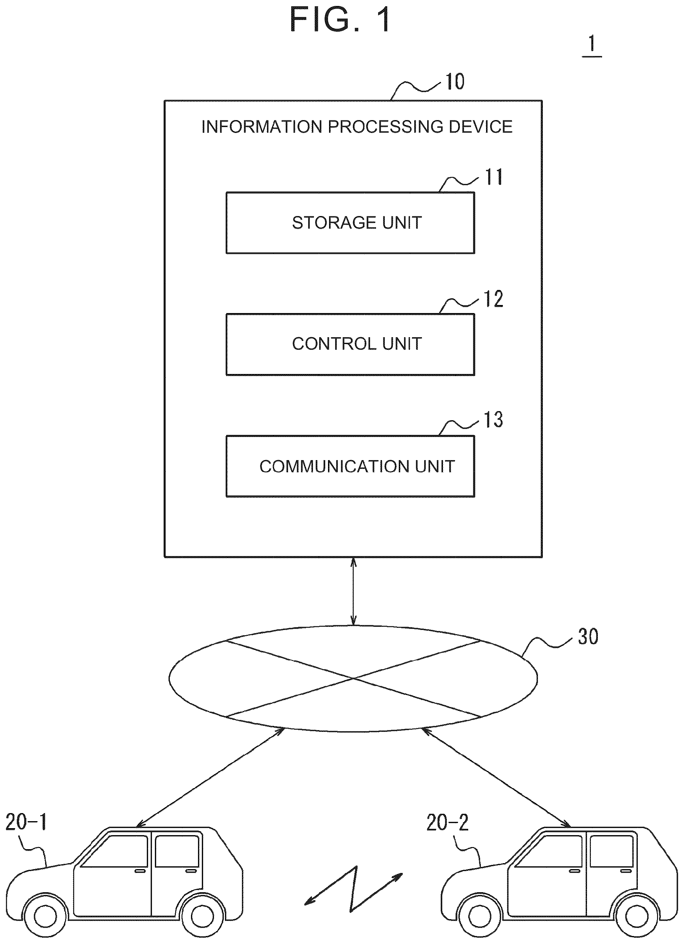

The configuration of an information processing system according to the embodiment will be described with reference to FIG. 1. An information processing system 1 illustrated in FIG. 1 includes an information processing device 10 and a plurality of vehicles 20. The information processing device 10 and the vehicles 20 are connected to each other so as to be able to communicate with each other via a network 30, including the Internet. For convenience, only two vehicles 20 (20-1 and 20-2) are illustrated in FIG. 1.

The information processing device 10 is a server that controls vehicle-to-vehicle communication. The information processing device 10 includes a storage unit 11, a control unit 12, and a communication unit 13.

The communication unit 13 includes a communication interface for communication with the vehicles 20. The information processing device 10 periodically (e.g., every few seconds) receives, from each of the vehicles 20, vehicle information indicating at least one of the state and the position of the vehicle 20 via the communication unit 13 and the network 30. The "state of the vehicle" includes, for example, surplus power, a surplus data capacity, whether the vehicle is parked, whether the vehicle is connected to public Wi-Fi (registered trademark), and so forth.

The storage unit 11 includes at least one semiconductor memory, at least one magnetic memory, at least one optical memory, or any combination of these. The semiconductor memory is, for example, a random access memory (RAM), a read only memory (ROM), or a flash memory. The storage unit 11 stores predetermined data relating to a predetermined area. The "predetermined data relating to a predetermined area" are data that may be requested by each vehicle 20, such as map information. The storage unit 11 also stores the vehicle information received by the communication unit 13 from each of the vehicles 20.

The control unit 12 includes at least one processor, at least one programmable circuit, at least one dedicated circuit, or any combination of these. The processor may be a general-purpose processor such as a central processing unit (CPU) or a graphics processing unit (GPU), or a dedicated processor that specializes in a specific process. The programmable circuit is, for example, a field-programmable gate array (FPGA). The dedicated circuit is, for example, an application specific integrated circuit (ASIC). The control unit 12 executes a process related to the operation of the information processing device 10 while controlling the various units of the information processing device 10.

Based on the vehicle information acquired from the vehicles 20, the control unit 12 determines (selects) a vehicle (hereinafter referred to as a "hub vehicle") that serves as a hub that provides data from the vehicles 20. The control unit 12 may determine a plurality of hub vehicles. In the present specification, for convenience of description, there is a single hub vehicle, implemented by the vehicle 20-1. However, there may be two or more hub vehicles.

The control unit 12 may determine, as the hub vehicle 20-1, a vehicle that meets at least one of the following from the vehicles 20 based on the vehicle information. Furthermore, the control unit 12 may determine, as the hub vehicle, a vehicle corresponding to any of the following, in the priority order of being given, from the vehicles 20 based on the vehicle information:
1. a vehicle with surplus power of a predetermined threshold or more;
2. a vehicle with a surplus data capacity of a predetermined threshold or more;
3. a vehicle that has been parked for a long time of a predetermined time or more;
4. a vehicle that is expected to be parked for a long time of a predetermined time or more;
5. a vehicle that has been present within a predetermined range from a different vehicle for a certain time or more; and
6. a vehicle connected to public Wi-Fi.

When determining the hub vehicle based on the surplus power, the control unit 12 may determine the hub vehicle in a predetermined order, such as in the order of a battery electric vehicle (BEV), a plug-in hybrid electric vehicle (PHEV), a hybrid electric vehicle (HEV), and a conventional car, for example. Furthermore, the control unit 12 may determine a PHEV as the hub vehicle only when the PHEV is being charged.

The "vehicle that is expected to be parked for a long time" refers to a vehicle parked in places such as shopping malls, stadiums, and event venues, for example. The control unit 12 may determine the "vehicle that is expected to be parked for a long time" by analyzing big data received from the vehicles 20.

The "vehicle that has been present within a predetermined range from a different vehicle for a certain time or more" refers to a vehicle that has been located at a short distance from a different vehicle for a long time, such as one of vehicles traveling in a group on a highway that does not overtake or pass the other vehicles and the position of which relative to the other vehicles slightly changes, for example. The control unit 12 may determine a "vehicle that has been present within a predetermined range from a different vehicle for a certain time or more" by analyzing big data received from the vehicles 20.

The control unit 12 can allow a "vehicle connected to public Wi-Fi" to download the predetermined data for free.

The control unit 12 may cancel, for each hub vehicle 20-1, the determination as the hub vehicle when a predetermined time has elapsed since the hub vehicle 20-1 was determined, or when the number of times of transmission of the predetermined data to the hub vehicle 20-1 exceeds a predetermined number of times. This process can suppress degradation of the performance of a battery or a storage unit of the hub vehicle 20-1.

In the following description, the vehicle 20 that receives the data provided from the hub vehicle will be referred to as a client vehicle. In the present specification, for convenience of description, there is a single client vehicle, implemented by the vehicle 20-2, that receives the data provided from the hub vehicle 20-1. However, there may be two or more client vehicles.

The control unit 12 may provide the hub vehicle 20-1 with a reward according to the amount of data transmitted to the client vehicle 20-2. The reward may be of any kind, and the control unit 12 may use a digital currency, points that can be exchanged for vouchers, a reduction in a lease fee, merchandise, or the like as the reward, for example.

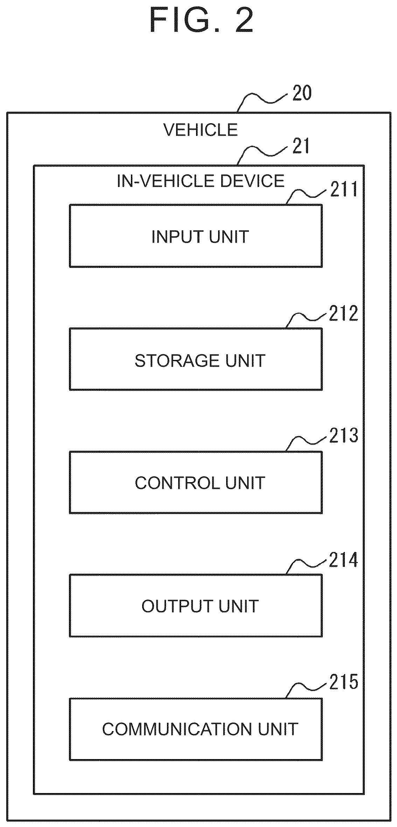

FIG. 2 is a block diagram illustrating a schematic configuration of the vehicle 20. The vehicle 20 includes an in-vehicle device 21. The in-vehicle device 21 includes an input unit 211, a storage unit 212, a control unit 213, an output unit 214, and a communication unit 215.

The input unit 211 includes at least one input interface. Examples of the input interface include a physical key, a capacitance key, a touch screen integrated with a display, and a microphone. The input unit 211 receives input from a user of the in-vehicle device 21.

The storage unit 212 includes at least one semiconductor memory, at least one magnetic memory, at least one optical memory, or any combination of these. The semiconductor memory is, for example, a RAM, a ROM, or a flash memory. The storage unit 212 of the hub vehicle 20-1 stores the predetermined data received from the information processing device 10. The storage unit 212 of the client vehicle 20-2 stores the predetermined data received from the hub vehicle 20-1.

The control unit 213 includes at least one processor, at least one programmable circuit, at least one dedicated circuit, or any combination of these. The processor may be a general-purpose processor such as a CPU or a GPU, or a dedicated processor that specializes in a specific process. The programmable circuit is, for example, an FPGA. The dedicated circuit is, for example, an ASIC. The control unit 213 executes a process related to the operation of the in-vehicle device 21 while controlling the various units of the in-vehicle device 21.

The output unit 214 includes at least one output interface. Examples of the output interface include a display and a speaker. The input unit 211 and the output unit 214 may be integrated into one unit such as a touch screen.

The communication unit 215 includes a communication interface for performing communication (e.g., cellular communication) with the information processing device 10 and a communication interface for performing vehicle-to-vehicle communication (e.g., Wi-Fi communication) with other vehicles 20. The communication unit 215 of each vehicle 20 periodically transmits the vehicle information to the information processing device 10.

When the hub vehicle 20-1 approaches close enough (for example, within 100 m) for the client vehicle 20-2 to establish vehicle-to-vehicle communication and establishes communication with the client vehicle 20-2, the communication unit 215 of the hub vehicle 20-1 transmits the predetermined data to the client vehicle 20-2 (i.e., the hub vehicle 20-1 and the client vehicle 20-2 transition to a data sharing mode). For example, at an intersection, the hub vehicle 20-1 and the client vehicle 20-2 transition to the data sharing mode when the hub vehicle 20-1 and the client vehicle 20-2 are stopped at a traffic light, or when the hub vehicle 20-1 passes the client vehicle 20-2 at an intersection. Furthermore, on a highway, the hub vehicle 20-1 and the client vehicle 20-2 transition to the data sharing mode when the vehicles are traveling in a group and the relative speed between the hub vehicle 20-1 and the client vehicle 20-2 is low at a threshold or less.

### First Embodiment

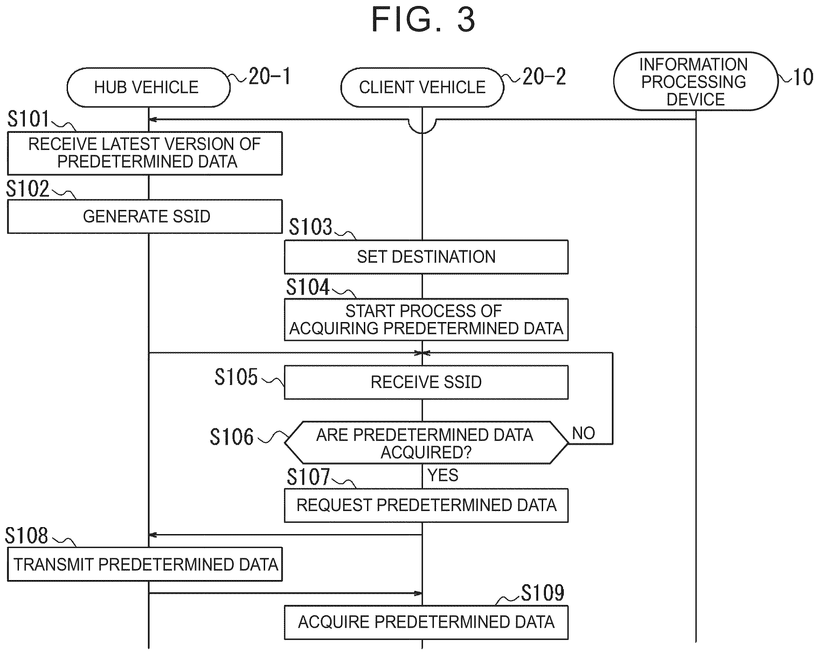

Next, a first operation example of the information processing system 1 will be described with reference to FIG. 3. It is assumed that the information processing device 10 periodically (e.g., every few seconds) receives, from each of the vehicles 20, vehicle information indicating at least one of the state and the position of the vehicle 20, and has already determined a plurality of hub vehicles 20-N (N includes 1) according to the above hub vehicle determination rules. In the first operation example, the client vehicle 20-2 determines the hub vehicle 20-1, from which the predetermined data are to be acquired, from the hub vehicles 20-N. For convenience of description, FIG. 3 illustrates only the hub vehicle 20-1, of the hub vehicles 20-N.

In the description of FIG. 3, the in-vehicle device 21 (first in-vehicle device) provided in the hub vehicle 20-1 is designated by reference sign 21-1, and the in-vehicle device 21 (second in-vehicle device) provided in the client vehicle 20-2 is designated by reference sign 21-2, in order to distinguish between the two. Similarly, the processing units provided in the in-vehicle device 21-1 are given a suffix "-1", and the processing units provided in the in-vehicle device 21-2 are given a suffix "-2", in order to distinguish therebetween.

In S101, the control unit 213-1 of the in-vehicle device 21-1 receives (acquires) the latest version of predetermined data relating to a predetermined area (hereinafter simply referred to as "predetermined data") from the information processing device 10 via the communication unit 215-1. The information processing device 10 may periodically transmit the predetermined data to the in-vehicle device 21-1, may transmit the predetermined data to the in-vehicle device 21-1 at the timing when the predetermined data are updated, or may transmit the predetermined data to the in-vehicle device 21-1 based on a request from the in-vehicle device 21-1. The in-vehicle device 21-1 stores the predetermined data in the storage unit 212-1 or a cache server.

In S102, the control unit 213-1 of the in-vehicle device 21-1 generates a service set identifier (SSID) including a time stamp of the time when the in-vehicle device 21-1 acquires the predetermined data and area information for identifying the predetermined area. For example, when the time stamp is 14:59 on March 1, 2025 and the predetermined area is Kansai, an example of the SSID may be toyotaMap_20250301_14:59_Kansai, and the "area information for identifying the predetermined area" may be "Kansai". The control unit 213-1 may determine the area information from the file name of the predetermined data, or may receive the area information from the information processing device 10 together with the predetermined data as metadata of the predetermined data. Meanwhile, when the control unit 213-1 of the in-vehicle device 21-1 receives a time stamp of the time when the predetermined data are generated as metadata of the predetermined data from the information processing device 10 together with the predetermined data in S101, the control unit 213-1 of the in-vehicle device 21-1 may generate an SSID including the time stamp of the time when the predetermined data are generated and the area information for identifying the predetermined area. The freshness of the predetermined data can be determined based on the time stamp of the time when the predetermined data are generated.

In S103, an occupant of the client vehicle 20-2 sets a destination (e.g., Shin-Osaka Station) in a navigation system. The in-vehicle device 21-2 of the client vehicle 20-2 may be integrated into the navigation system. When the in-vehicle device 21-2 is integrated into the navigation system, the occupant of the client vehicle 20-2 sets a destination via the input unit 211-2 of the in-vehicle device 21-2.

In S104, the control unit 213-2 of the in-vehicle device 21-2 starts a process of acquiring the predetermined data at a predetermined timing. The "predetermined timing" may be the time when an instruction to acquire the predetermined data is input from the input unit 211-2, or may be the time when a destination is set in the navigation system.

In S105, the control unit 213-2 of the in-vehicle device 21-2 receives the SSID generated in S102 from the in-vehicle device 21-1 via the communication unit 215-2.

In S106, the control unit 213-2 of the in-vehicle device 21-2 determines whether to acquire the predetermined data based on the time stamp and the area information (first criterion) included in the SSID. When it is determined not to acquire the predetermined data from the hub vehicle 20-1, the control unit 213-2 receives an SSID from a different hub vehicle, and determines whether to acquire the predetermined data based on the time stamp and the area information included in the SSID.

The determination as to whether to acquire the predetermined data, executed by the control unit 213-2 in S106, may include making the determination further based on information (second criterion) about the current position or the destination of the client vehicle 20-2, acquired from information set in the car navigation system of the client vehicle 20-2. This allows the in-vehicle device 21-2 to acquire the predetermined data relating to the area including the current position or the destination. The control unit 213-2 may acquire the current position of the client vehicle 20-2 using a global positioning system (GPS) sensor.

The determination as to whether to acquire the predetermined data, executed by the control unit 213-2 in S106, may include making the determination further based on whether the time stamp included in the SSID is within a predetermined time (e.g., 24 hours) from the current time (third criterion). This allows the in-vehicle device 21-2 to acquire a newer version of the predetermined data. When a plurality of SSIDs including the same area information is received, the control unit 213-2 may determine to acquire the predetermined data from the in-vehicle device 21-1 that transmits the SSID with the most recent time stamp.

The determination as to whether to acquire the predetermined data, executed by the control unit 213-2 in S106, may include making the determination further based on whether the received signal strength indicator (RSSI) of radio waves received from the in-vehicle device 21-1 is a predetermined threshold or more (fourth criterion). This allows the in-vehicle device 21-2 to suppress poor reception and reliably acquire the predetermined data. When the control unit 213-2 receives a plurality of SSIDs including the same area information, the control unit 213-2 may determine to acquire the predetermined data from the in-vehicle device 21-1 with the strongest received signal strength indicator.

The determination as to whether to acquire the predetermined data, executed by the control unit 213-2 in S106, may include making the determination based on any combination of the first to fourth criteria described above.

In S107, when it is determined in S106 to acquire the predetermined data, the control unit 213-2 requests the predetermined data from the in-vehicle device 21-1. That is, the control unit 213-2 transmits request information for the predetermined data to the in-vehicle device 21-1 via the communication unit 215-2.

In S108, the control unit 213-1 of the in-vehicle device 21-1 transmits the predetermined data to the in-vehicle device 21-2 via the communication unit 215-1 in response to the request from the in-vehicle device 21-2. When the predetermined data have been deleted, the in-vehicle device 21-1 acquires the predetermined data again from the information processing device 10, and transmits the predetermined data to the in-vehicle device 21-2.

In S109, the control unit 213-2 of the in-vehicle device 21-2 stores the predetermined data acquired from the in-vehicle device 21-1 in the storage unit 212-2. The output unit 214-2 of the in-vehicle device 21-2 displays the acquired predetermined data.

As described above, in the information processing system 1 according to the first embodiment, the control unit 213-1 of the in-vehicle device 21-1 receives (acquires) predetermined data relating to a predetermined area from the information processing device 10, and generates an SSID including a time stamp of the time when the predetermined data are acquired or generated and area information for identifying the predetermined area. In addition, the control unit 213-2 of the in-vehicle device 21-2 receives the SSID from the in-vehicle device 21-1, determines whether to acquire the predetermined data based on the time stamp and the area information included in the SSID, and when it is determined to acquire the predetermined data, requests the predetermined data from the in-vehicle device 21-1. Therefore, the client vehicle 20-2 can acquire the latest predetermined data required at the required timing, and can receive the requested data more efficiently.

### Second Embodiment

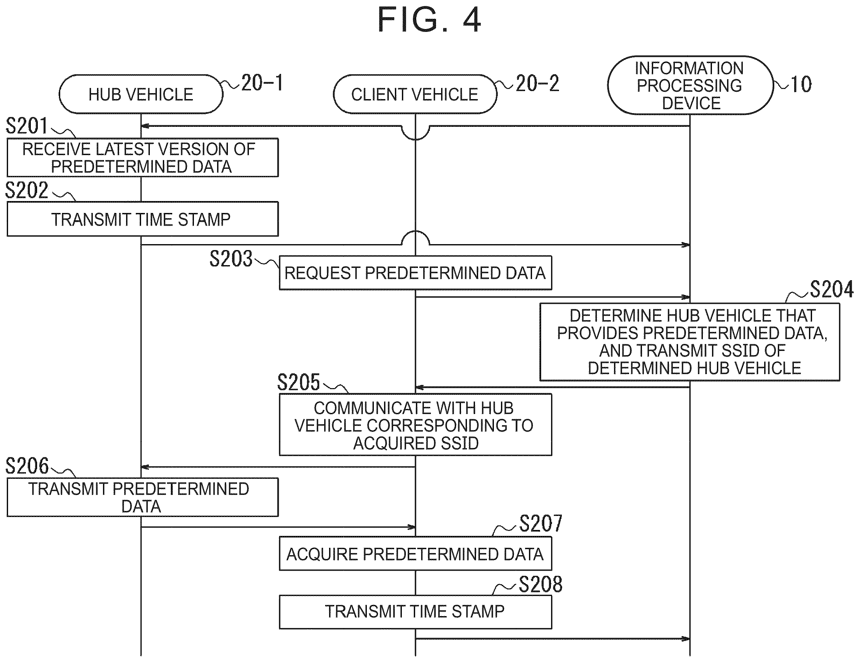

Next, a second operation example of the information processing system 1 will be described with reference to FIG. 4. It is assumed that the information processing device 10 periodically (e.g., every few seconds) receives, from each of the vehicles 20, vehicle information indicating at least one of the state and the position of the vehicle 20, and has already determined a plurality of hub vehicles 20-N (N includes 1) according to the above hub vehicle determination rules. In the second operation example, the information processing device 10 determines the hub vehicle 20-1 that transmits the predetermined data to the client vehicle 20-2, from the hub vehicles 20-N. For convenience of description, FIG. 4 illustrates only the hub vehicle 20-1, of the hub vehicles 20-N.

In the description of FIG. 4, the in-vehicle device 21 (first in-vehicle device) provided in the hub vehicle 20-1 is designated by reference sign 21-1, and the in-vehicle device 21 (second in-vehicle device) provided in the client vehicle 20-2 is designated by reference sign 21-2, in order to distinguish between the two. Similarly, the processing units provided in the in-vehicle device 21-1 are given a suffix "-1", and the processing units provided in the in-vehicle device 21-2 are given a suffix "-2", in order to distinguish therebetween.

In S201, the control unit 213-1 of the in-vehicle device 21-1 receives (acquires) the latest version of predetermined data relating to a predetermined area (hereinafter simply referred to as "predetermined data") from the information processing device 10 via the communication unit 215-1. The information processing device 10 may periodically transmit the predetermined data to the in-vehicle device 21-1, may transmit the predetermined data to the in-vehicle device 21-1 at the timing when the predetermined data are updated, or may transmit the predetermined data to the in-vehicle device 21-1 based on a request from the in-vehicle device 21-1. The in-vehicle device 21-1 stores the predetermined data in the storage unit 212-1 or a cache server.

In S202, the control unit 213-1 of the in-vehicle device 21-1 transmits a time stamp of the time when the in-vehicle device 21-1 acquired the predetermined data or a time stamp of the time when the predetermined data are generated to the information processing device 10 via the communication unit 215-1. The control unit 213-1 may include the name of the area of the predetermined data in the time stamp.

In S203, the control unit 213-2 of the in-vehicle device 21-2 requests the predetermined data from the information processing device 10 at a predetermined timing. That is, the control unit 213-2 transmits request information for the predetermined data to the information processing device 10 via the communication unit 215-2. The "predetermined timing" may be the time when an instruction to acquire the predetermined data is input from the input unit 211-2, or may be the time when a destination is set in the navigation system. The control unit 213-2 may include, in the request information, the name of the area input from the input unit 211-2 or the destination set in the navigation system.

In S204, in response to receiving the request information for the predetermined data, the control unit 12 of the information processing device 10 determines the hub vehicle 20-1 that provides the predetermined data to the client vehicle 20-2 based on the time stamp (first criterion). For example, the control unit 12 determines, based on the time stamp, the hub vehicle 20-1 having the predetermined data matching the destination set in the navigation system.

The determination of the hub vehicle 20-1 that provides the predetermined data to the client vehicle 20-2, executed by the control unit 12 in S204, may include making the determination further based on whether the time stamp is within a predetermined time from the current time (second criterion). That is, when the time stamp indicates a time a predetermined time (e.g., 24 hours) or more past the current time, the control unit 12 of the information processing device 10 may consider that the predetermined data are not the latest and may determine to communicate with a different hub vehicle that has the latest predetermined data (a vehicle that has the predetermined data updated within the last 24 hours).

The determination of the hub vehicle 20-1 that provides the predetermined data to the client vehicle 20-2, executed by the control unit 12 in S204, may include making the determination further based on position information (third criterion) of each of the hub vehicle 20-1 and the client vehicle 20-2. For example, the control unit 12 determines the hub vehicle 20-1 from among the vehicles 20 that are present within an area in which vehicle-to-vehicle communication with the client vehicle 20-2 is possible (e.g., an area with a radius of 100 m centered on the client vehicle 20-2). For example, the control unit 12 determines the hub vehicle 20-1 from among the vehicles 20 that are highly likely to pass the client vehicle 20-2 in the future. For example, when the client vehicle 20-2 is traveling on a highway, the control unit 12 determines the hub vehicle 20-1 from among the vehicles 20 whose speed relative to the client vehicle 20-2 is equal to or less than a threshold. For example, when the client vehicle 20-2 is traveling near an entrance/exit of a highway or is about to leave a parking lot, the control unit 12 determines the hub vehicle 20-1 from among the vehicles 20 that are highly likely to merge with the client vehicle 20-2.

The determination of the hub vehicle 20-1 that provides the predetermined data to the client vehicle 20-2, executed by the control unit 12 in S204, may include making the determination based on any combination of the first to third criteria described above.

In S204, when the hub vehicle 20-1 is determined, the control unit 12 transmits the SSID of the determined hub vehicle 20-1 (in-vehicle device 21-1) to the client vehicle 20-2 (in-vehicle device 21-2) via the communication unit 13.

In S204, the SSID may be generated by the information processing device 10, or may be generated by the hub vehicle 20-1. When the SSID is generated by the hub vehicle 20-1, the information processing device 10 receives the SSID from the hub vehicle 20-1 and then transmits the SSID to the client vehicle 20-2.

In S205, the control unit 213-2 of the in-vehicle device 21-2 performs communication (e.g., Wi-Fi communication) with the in-vehicle device 21-1 corresponding to the SSID received from the information processing device 10 via the communication unit 215-2, and requests the predetermined data from the in-vehicle device 21-1. That is, the control unit 213-2 transmits request information for the predetermined data to the in-vehicle device 21-1 via the communication unit 215-2.

In S206, the control unit 213-1 of the in-vehicle device 21-1 transmits the predetermined data to the in-vehicle device 21-2 via the communication unit 215-1 in response to the request from the in-vehicle device 21-2.

In S207, the control unit 213-2 of the in-vehicle device 21-2 stores the predetermined data acquired from the in-vehicle device 21-1 via the communication unit 215-2 in the storage unit 212-2. The output unit 214-2 of the in-vehicle device 21-2 displays the acquired predetermined data.

In S208, the control unit 213-2 of the in-vehicle device 21-2 generates a time stamp of the time when the predetermined data are acquired, and transmits the time stamp to the information processing device 10 via the communication unit 215-2. The control unit 213-2 may include the name of the area of the predetermined data in the time stamp.

The control unit 12 of the information processing device 10 can manage the version of the predetermined data held by the hub vehicle 20-1 and the client vehicle 20-2 using the time stamp. Therefore, in S204, the control unit 12 may check the version of the predetermined data held by the client vehicle 20-2, and when the client vehicle 20-2 has an already older version of the predetermined data, determine the hub vehicle 20-1 that has a newer version of the predetermined data. In addition, when the client vehicle 20-2 has a self-compilation environment or an interpreter-type execution environment, the hub vehicle 20-1 may receive information about the version of the predetermined data held by the client vehicle 20-2 from the client vehicle 20-2, and transmit to the client vehicle 20-2 only differential data between that version of the predetermined data and the latest version of the predetermined data, or only compressed data of the differential data.

As described above, in the information processing system 1 according to the second embodiment, the control unit 12 of the information processing device 10 receives, from each of the vehicles 20, vehicle information indicating at least one of the state and the position of the vehicle 20, determines a hub vehicle 20-N from the vehicles 20 based on the vehicle information, and transmits predetermined data relating to a predetermined area to the hub vehicle 20-N. In addition, the control unit 12 of the information processing device 10 receives request information for the predetermined data from the client vehicle 20-2, and in response to receiving the request information, determines the hub vehicle 20-1 that provides the predetermined data to the client vehicle 20-2 based on the time stamp of the time when the hub vehicle 20-N acquires the predetermined data or when the predetermined data are generated, and transmits the SSID of the determined hub vehicle 20-1 to the client vehicle 20-2. Therefore, the client vehicle 20-2 can acquire the latest predetermined data required at the required timing, and can receive the requested data more efficiently.

### Program

A computer capable of executing program instructions can be used to function as the information processing device 10 or the in-vehicle device 21 described above. A program can cause the computer to function as the information processing device 10 or the in-vehicle device 21, by causing the computer to execute the operation described above.

The program may be stored in a non-transitory computer-readable medium. Examples of the non-transitory computer-readable medium include a flash memory, a magnetic recording device, an optical disc, a magneto-optical recording medium, and a ROM. The program is distributed by selling, transferring, or renting a portable medium such as a secure digital (SD) card, a digital versatile disc (DVD), or a compact disc read only memory (CD-ROM) in which the program is stored, for example. The program may be distributed by storing the program in a storage of a server and transferring the program from the server to other computers. The program may be provided as a program product.

The computer temporarily stores the program stored in the portable medium or the program transferred from the server in the storage unit 11 or the storage unit 212, for example. The computer then reads the program stored in the storage unit 11 or the storage unit 212 with a processor, and executes a process according to the read program with the processor.

The computer may read the program directly from the portable medium and execute the process according to the program. Each time the program is transferred from the server to the computer, the computer may successively execute the process according to the program that has been received. The process may be executed by a so-called application service provider (ASP) type service, which implements functions only by issuing execution instructions and acquiring results, without transferring a program from a server to a computer. The program includes information that is provided to be processed by an electronic computer, and that is equivalent to a program. For example, data that are not a direct command to a computer but have the property of defining a process by the computer corresponds to the "information equivalent to a program".

Although the above embodiment has been described as a typical example, various modifications and changes may be made without departing from the spirit and scope of the present disclosure. For example, a plurality of component blocks or process steps described in the embodiment can be combined into one, and one component block or processing step can be divided into a plurality.

Some embodiments of the present disclosure will be indicated below. However, it should be noted that the embodiments of the present disclosure are not limited to these.

A first aspect of the present disclosure provides an information processing system including: a first in-vehicle device mounted on a hub vehicle that serves as a hub that provides data, the first in-vehicle device including a first control unit; a second in-vehicle device mounted on a client vehicle that receives the data provided from the hub vehicle, the second in-vehicle device including a second control unit; and an information processing device that includes a third control unit and stores the data. The third control unit includes a control unit that transmits predetermined data relating to a predetermined area to the first in-vehicle device. The first control unit is configured to receive the predetermined data from the information processing device, generate an SSID including a time stamp of a time when the predetermined data are acquired or generated and area information for identifying the predetermined area, and transmit the predetermined data to the second in-vehicle device in response to a request from the second in-vehicle device. The second control unit is configured to receive the SSID from the first in-vehicle device, make a determination as to whether to acquire the predetermined data based on the time stamp and the area information included in the SSID, and when determining to acquire the predetermined data, request the predetermined data from the first in-vehicle device.

A second aspect of the present disclosure provides an information processing system including: a first in-vehicle device mounted on a hub vehicle that serves as a hub that provides data; and a second in-vehicle device mounted on a client vehicle that receives the data provided from the hub vehicle. The first in-vehicle device includes a first control unit configured to receive predetermined data relating to a predetermined area from an information processing device, and generate an SSID including a time stamp of a time when the predetermined data are acquired or generated and area information for identifying the predetermined area. The second in-vehicle device includes a second control unit configured to receive the SSID from the first in-vehicle device, make a determination as to whether to acquire the predetermined data based on the time stamp and the area information included in the SSID, and when determining to acquire the predetermined data, request the predetermined data from the first in-vehicle device.

In the second aspect, the determination as to whether to acquire the predetermined data, made by the second control unit of the second in-vehicle device, may be further based on information about a current position or a destination of the client vehicle.

In the second aspect, the information about the current position or the destination of the client vehicle may be acquired from information set in a car navigation system of the client vehicle.

In the first or second aspect, the determination as to whether to acquire the predetermined data, made by the second control unit of the second in-vehicle device, may be further based on whether the time stamp is within a predetermined time from a current time.

In the first or second aspect, the determination as to whether to acquire the predetermined data, made by the second control unit of the second in-vehicle device, may be further based on whether a received signal strength indicator of radio waves received from the first in-vehicle device is a predetermined threshold or more.

A third aspect of the present disclosure provides an in-vehicle device mounted on a hub vehicle that serves as a hub that provides data. The in-vehicle device includes a control unit configured to: receive predetermined data relating to a predetermined area from an information processing device; generate an SSID including a time stamp of a time when the predetermined data are acquired or generated and area information for identifying the predetermined area; and transmit the predetermined data to a client vehicle that receives the data provided from the hub vehicle when the client vehicle determines to acquire the predetermined data based on the time stamp and the area information included in the SSID.

A fourth aspect of the present disclosure provides an in-vehicle device mounted on a client vehicle that receives data provided from a hub vehicle that serves as a hub that provides the data. The in-vehicle device includes a control unit configured to: receive an SSID generated by the hub vehicle from the hub vehicle, the SSID including a time stamp of predetermined data relating to a predetermined area and area information for identifying the predetermined area; make a determination as to whether to acquire the predetermined data based on the time stamp and the area information included in the SSID; and when determining to acquire the predetermined data, request the predetermined data from the hub vehicle.

In the fourth aspect, the determination as to whether to acquire the predetermined data may be further based on information about a current position or a destination of the client vehicle.

In the fourth aspect, the information about the current position or the destination of the client vehicle may be acquired from information set in a car navigation system of the client vehicle.

In the fourth aspect, the determination as to whether to acquire the predetermined data may be further based on whether the time stamp is within a predetermined time from a current time.

A fifth aspect of the present disclosure provides an information processing system including: a first in-vehicle device mounted on a hub vehicle that serves as a hub that provides data, the first in-vehicle device including a first control unit; a second in-vehicle device mounted on a client vehicle that receives the data provided from the hub vehicle, the second in-vehicle device including a second control unit; and an information processing device that includes a third control unit and stores the data. The third control unit is configured to receive vehicle information from each of a plurality of vehicles, the vehicle information indicating at least one of a state and a position of each of the vehicles, determine the hub vehicle from among the vehicles based on the vehicle information, transmit predetermined data relating to a predetermined area to the first in-vehicle device, receive request information for the predetermined data from the second in-vehicle device, in response to receiving the request information, make a determination of the first in-vehicle device that provides the predetermined data to the second in-vehicle device based on a time stamp of a time when the first in-vehicle device acquires the predetermined data or when the predetermined data are generated, and transmit an SSID of the first in-vehicle device determined to the second in-vehicle device. The first control unit is configured to receive the predetermined data from the information processing device, and transmit the time stamp to the information processing device. The second control unit is configured to transmit the request information for the predetermined data to the information processing device, receive the SSID from the information processing device, and receive the predetermined data from the first in-vehicle device corresponding to the SSID.

A sixth aspect of the present disclosure provides an information processing device including a control unit configured to: receive vehicle information from each of a plurality of vehicles, the vehicle information indicating at least one of a state and a position of each of the vehicles; make a determination of a hub vehicle that serves as a hub that provides data from the vehicles based on the vehicle information; transmit predetermined data relating to a predetermined area to the hub vehicle; receive request information for the predetermined data from a client vehicle that receives the data provided from the hub vehicle; in response to receiving the request information, make a determination of the hub vehicle that provides the predetermined data to the client vehicle based on a time stamp of a time when the hub vehicle acquires the predetermined data or when the predetermined data are generated; and transmit, to the client vehicle, an SSID of the determined hub vehicle that provides the predetermined data to the client vehicle.

In the sixth aspect, the determination of the hub vehicle that provides the predetermined data to the client vehicle may be further based on whether the time stamp is within a predetermined time from a current time.

In the sixth aspect, the determination of the hub vehicle that provides the predetermined data to the client vehicle may be further based on position information of each of the hub vehicle and the client vehicle.

In the sixth aspect, the SSID may be generated by the information processing device or the hub vehicle.

In the sixth aspect, the determination of the hub vehicle that serves as the hub that provides the data from the vehicles may include determining, as the hub vehicle, a vehicle corresponding to at least one of: a vehicle with surplus power of a predetermined threshold or more; a vehicle with a surplus data capacity of a predetermined threshold or more; a vehicle that has been parked for a time equal to or longer than a predetermined time; a vehicle that is expected to be parked for the time equal to or longer than the predetermined time; a vehicle that has been present within a predetermined range from a different vehicle for a certain time or more; and a vehicle connected to public Wi-Fi.

In the sixth aspect, the determination of the hub vehicle that serves as the hub that provides the data from the vehicles may include determining, as the hub vehicle, a vehicle corresponding to any of following in a priority order of being given: a vehicle with surplus power of a predetermined threshold or more; a vehicle with a surplus data capacity of a predetermined threshold or more; a vehicle that has been parked for a time equal to or longer than a predetermined time; a vehicle that is expected to be parked for the time equal to or longer than the predetermined time; a vehicle that has been present within a predetermined range from a different vehicle for a certain time or more; and a vehicle connected to public Wi-Fi.

A seventh aspect of the present disclosure provides an information processing method executed in an information processing system including a first in-vehicle device mounted on a hub vehicle that serves as a hub that provides data, and a second in-vehicle device mounted on a client vehicle that receives the data provided from the hub vehicle. The information processing method includes: receiving, by the first in-vehicle device, predetermined data relating to a predetermined area from an information processing device; generating, by the first in-vehicle device, an SSID including a time stamp of a time when the predetermined data are acquired or generated and area information for identifying the predetermined area; receiving, by the second in-vehicle device, the SSID from the first in-vehicle device; determining, by the second in-vehicle device, whether to acquire the predetermined data based on the time stamp and the area information included in the SSID; and requesting, by the second in-vehicle device, the predetermined data from the first in-vehicle device in a case where a determination is made to acquire the predetermined data.

An eighth aspect of the present disclosure provides an information processing method executed by an information processing device. The information processing method includes: receiving vehicle information from each of a plurality of vehicles, the vehicle information indicating at least one of a state and a position of each of the vehicles; determining a hub vehicle that serves as a hub that provides data from the vehicles based on the vehicle information; transmitting predetermined data relating to a predetermined area to the hub vehicle; receiving request information for the predetermined data from a client vehicle that receives the data provided from the hub vehicle; in response to receiving the request information, determining the hub vehicle that provides the predetermined data to the client vehicle based on a time stamp of a time when the hub vehicle acquires the predetermined data or when the predetermined data are generated; and transmitting, to the client vehicle, an SSID of the determined hub vehicle that provides the predetermined data to the client vehicle.

## Claims

1. An in-vehicle device (21-1) mounted on a hub vehicle (20-1) that serves as a hub that provides data, the in-vehicle device (21-1) comprising a control unit (213-1) configured to:
receive predetermined data relating to a predetermined area from an information processing device (10);
generate a Service Set Identifier (SSID) including a time stamp of a time when the predetermined data are acquired or generated and area information for identifying the predetermined area; and
transmit the predetermined data to a client vehicle (20-2) that receives the data provided from the hub vehicle (20-1) when the client vehicle (20-2) determines to acquire the predetermined data based on the time stamp and the area information included in the SSID.

2. An in-vehicle device (21-2) mounted on a client vehicle (20-2) that receives data provided from a hub vehicle (20-1) that serves as a hub that provides the data, the in-vehicle device (21-2) comprising a control unit (213-2) configured to:
receive a Service Set Identifier (SSID) generated by the hub vehicle (20-1) from the hub vehicle (20-1), the SSID including a time stamp of predetermined data relating to a predetermined area and area information for identifying the predetermined area;
make a determination as to whether to acquire the predetermined data based on the time stamp and the area information included in the SSID; and
when determining to acquire the predetermined data, request the predetermined data from the hub vehicle (20-1).

3. The in-vehicle device (21-2) according to claim 2, wherein the determination as to whether to acquire the predetermined data is further based on information about a current position or a destination of the client vehicle (20-2).

4. The in-vehicle device (21-2) according to claim 3, wherein the information about the current position or the destination of the client vehicle (20-2) is acquired from information set in a car navigation system of the client vehicle (20-2).

5. The in-vehicle device (21-2) according to claim 2, wherein the determination as to whether to acquire the predetermined data is further based on at least one of whether the time stamp is within a predetermined time from a current time, and whether a received signal strength indicator of radio waves received from the hub vehicle (20-1) is a predetermined threshold or more.

6. An information processing system (1) comprising:
the in-vehicle device (21-1) mounted on the hub vehicle (20-1) according to claim 1; and
the in-vehicle device (21-2) mounted on the client vehicle (20-2) according to claim 2.

7. The information processing system (1) according to claim 6, further comprising the information processing device (10) that stores the data and includes a third control unit (12), the third control unit (12) being configured to transmit the predetermined data to the in-vehicle device (21-1) mounted on the hub vehicle (20-1).

8. An information processing device (10) comprising a control unit (12) configured to:
receive vehicle information from each of a plurality of vehicles (20), the vehicle information indicating at least one of a state and a position of each of the vehicles (20);
make a determination of a hub vehicle (20-1) that serves as a hub that provides data from the vehicles (20) based on the vehicle information;
transmit predetermined data relating to a predetermined area to the hub vehicle (20-1);
receive request information for the predetermined data from a client vehicle (20-2) that receives the data provided from the hub vehicle (20-1);
in response to receiving the request information, make a determination of the hub vehicle (20-1) that provides the predetermined data to the client vehicle (20-2) based on a time stamp of a time when the hub vehicle (20-1) acquires the predetermined data or when the predetermined data are generated; and
transmit, to the client vehicle (20-2), a Service Set Identifier (SSID) of the determined hub vehicle (20-1) that provides the predetermined data to the client vehicle (20-2).

9. The information processing device (10) according to claim 8, wherein the determination of the hub vehicle (20-1) that provides the predetermined data to the client vehicle (20-2) is further based on at least one of a determination on whether the time stamp is within a predetermined time from a current time and position information of each of the hub vehicle (20-1) and the client vehicle (20-2).

10. The information processing device (10) according to claim 8, wherein the SSID is generated by the information processing device or the hub vehicle (20-1).

11. The information processing device (10) according to claim 8, wherein the determination of the hub vehicle (20-1) that serves as the hub that provides the data from the vehicles (20) includes determining, as the hub vehicle (20-1), a vehicle corresponding to at least one of:
a vehicle with surplus power of a predetermined threshold or more;
a vehicle with a surplus data capacity of a predetermined threshold or more;
a vehicle that has been parked for a time equal to or longer than a predetermined time;
a vehicle that is expected to be parked for the time equal to or longer than the predetermined time;
a vehicle that has been present within a predetermined range from a different vehicle for a certain time or more; and
a vehicle connected to public Wi-Fi.

12. The information processing device (10) according to claim 8, wherein the determination of the hub vehicle (20-1) that serves as the hub that provides the data from the vehicles (20) includes determining, as the hub vehicle (20-1), a vehicle corresponding to any of following in a priority order of being given:
a vehicle with surplus power of a predetermined threshold or more;
a vehicle with a surplus data capacity of a predetermined threshold or more;
a vehicle that has been parked for a time equal to or longer than a predetermined time;
a vehicle that is expected to be parked for the time equal to or longer than the predetermined time;
a vehicle that has been present within a predetermined range from a different vehicle for a certain time or more; and
a vehicle connected to public Wi-Fi.

13. An information processing system comprising:
the information processing device (10) according to claim 8;
a first in-vehicle device (21-1) mounted on the hub vehicle (20-1), the first in-vehicle device (21-1) including a first control unit (213-1); and
a second in-vehicle device (21-2) mounted on the client vehicle (20-22), the second in-vehicle device (21-2) including a second control unit (213-2), wherein
the first control unit (213-1) is configured to
receive the predetermined data from the information processing device (10), and
transmit the time stamp to the information processing device (10), and
the second control unit (213-2) is configured to
transmit the request information for the predetermined data to the information processing device (10),
receive the SSID from the information processing device (10), and
receive the predetermined data from the first in-vehicle device (21-1) corresponding to the SSID.

14. An information processing method executed in an information processing system (1) including a first in-vehicle device (21-1) mounted on a hub vehicle (20-1) that serves as a hub that provides data, and a second in-vehicle device (21-2) mounted on a client vehicle (20-2) that receives the data provided from the hub vehicle (20-1), the information processing method comprising:
receiving, by the first in-vehicle device (21-1), predetermined data relating to a predetermined area from an information processing device (10);
generating, by the first in-vehicle device (21-1), a Service Set Identifier (SSID) including a time stamp of a time when the predetermined data are acquired or generated and area information for identifying the predetermined area;
receiving, by the second in-vehicle device (21-2), the SSID from the first in-vehicle device (21-1);
determining, by the second in-vehicle device (21-2), whether to acquire the predetermined data based on the time stamp and the area information included in the SSID; and
requesting, by the second in-vehicle device (21-2), the predetermined data from the first in-vehicle device (21-1) in a case where a determination is made to acquire the predetermined data.

15. An information processing method executed by an information processing device (10), the information processing method comprising:
receiving vehicle information from each of a plurality of vehicles (20), the vehicle information indicating at least one of a state and a position of each of the vehicles (20);
determining a hub vehicle (20-1) that serves as a hub that provides data from the vehicles (20) based on the vehicle information;
transmitting predetermined data relating to a predetermined area to the hub vehicle (20-1);
receiving request information for the predetermined data from a client vehicle (20-2) that receives the data provided from the hub vehicle (20-1);
in response to receiving the request information, determining the hub vehicle (20-1) that provides the predetermined data to the client vehicle (20-2) based on a time stamp of a time when the hub vehicle (20-1) acquires the predetermined data or when the predetermined data are generated; and
transmitting, to the client vehicle (20-2), a Service Set Identifier (SSID) of the determined hub vehicle (20-1) that provides the predetermined data to the client vehicle (20-2).
